# EUROPÄISCHE PATENTSCHRIFT

(11) **EP 3 572 606 B1**
(45) Veröffentlichungstag und Bekanntmachung des Hinweises auf die Patenterteilung: **10.07.2024**
(21) Anmeldenummer: 19173316.1
(22) Anmeldetag: 08.05.2019
(51) Int. Cl.: E05F 15/611, F24C 15/02, E05F 15/63, F16H 1/00

(54) **GERÄT FÜR DIE ZUBEREITUNG VON SPEISEN UND/ODER GETRÄNKEN ODER FÜR DIE REINIGUNG EINES ZU REINIGENDEN GUTES**
APPARATUS FOR PREPARING FOOD AND/OR BEVERAGES OR FOR THE CLEANING OF A MATERIAL TO BE CLEANED
DISPOSITIF POUR LA PRÉPARATION D'ALIMENTS ET / OU DE BOISSONS OU POUR LE NETTOYAGE D'UN ARTICLE À NETTOYER

(30) Priorität: 23.05.2018 DE 102018112289
(43) Veröffentlichungstag der Anmeldung: 27.11.2019
(73) Patentinhaber: Miele & Cie. KG, 33332 Gütersloh (DE)
(72) Erfinder: Render, Joachim, 48231 Warendorf (DE)

(56) Entgegenhaltungen:
- DE-B3- 102015 000 407
- US-A1- 2015 354 261

## Beschreibung

Die Erfindung betrifft ein Gerät für die Zubereitung von Speisen und/oder Getränken oder für die Reinigung eines zu reinigenden Gutes nach der im Oberbegriff des Anspruchs 1 genannten Art.

Aus der US 2015/0354261 A1 ist ein Gerät, umfassend ein Gehäuse und eine relativ zu dem Gehäuse bewegliche Tür bekannt, wobei die Tür mittels eines mobilen Trägerteils und eines fixen Trägerteils mit einem an dem Gehäuse angeordneten Antrieb kraftübertragend undloder momentübertragend verbunden ist, und in einem Betriebsmodus des Antriebs zwischen einer ersten Lage und einer zweiten Lage hin und her bewegbar ist.

Aus der DE 10 2015 000 407 B3 ist ein Scharnier für einen Herd bekannt, an dem ein Schwenkarm schwenkbar gelagert ist, der durch einen Antrieb betätigbar ist. Der Antrieb ist mit einem Stößel verbunden, der mit dem Schwenkarm auf Druck in Wirkverbindung steht.

Der Erfindung stellt sich somit das Problem, ein Gerät für die Zubereitung von Speisen und/oder Getränken oder für die Reinigung eines zu reinigenden Gutes anzugeben, bei dem die Bewegung des beweglichen Teils mit einer geringeren Antriebsleistung ermöglicht ist.

Erfindungsgemäß wird dieses Problem durch ein Gerät für die Zubereitung von Speisen undloder Getränken oder für die Reinigung eines zu reinigenden Gutes mit den Merkmalen des Patentanspruchs 1 gelöst, wonach die Kopplungsvorrichtung ein Getriebe aufweist, wobei das Getriebe derart ausgebildet ist, dass bei einer Bewegung des beweglichen Teils in Richtung der ersten Lage undloder in Richtung der zweiten Lage die von dem Antrieb mittels der Kopplungsvorrichtung auf das bewegliche Teil ausgeübte Kraft undloder das von dem Antrieb mittels der Kopplungsvorrichtung auf das bewegliche Teil ausgeübte Moment und/oder eine Geschwindigkeit des beweglichen Teils abhängig von der Lage des beweglichen Teils sind/ist. Vorteilhafte Ausgestaltungen und Weiterbildungen der Erfindung ergeben sich aus den nachfolgenden Unteransprüchen.

Der mit der Erfindung erreichbare Vorteil besteht insbesondere darin, dass für die Bewegung des beweglichen Teils eine geringere Antriebsleistung erforderlich ist. Aufgrund der geringeren erforderlichen Antriebsleistung ist ein Antrieb verwendbar, der zum einen platzsparend ausgebildet und zum anderen kostengünstig ist. Ferner ist ein derartiger Antrieb auch leiser im Vergleich zu leistungsstärkeren Antrieben. Da die mittels des Antriebs und der Kopplungsvorrichtung auf das bewegliche Teil ausgeübte Kraft undloder das von dem Antrieb mittels der Kopplungsvorrichtung auf das bewegliche Teil ausgeübte Moment undloder eine Geschwindigkeit des beweglichen Teils gemäß der Erfindung von der Lage des beweglichen Teils abhängig sind/ist, ist gewährleistet, dass die auf das bewegliche Teil übertragene Kraft undloder das auf das bewegliche Teil übertragene Moment und/oder die Geschwindigkeit des beweglichen Teils in jeder Lage des beweglichen Teils relativ zu dem Gehäuse auf die jeweiligen Erfordernisse des Einzelfalls angepasst sind/ist. Die erste Lage und die zweite Lage des beweglichen Teils können beispielsweise jeweils als eine Endlage für die Bewegung des beweglichen Teils ausgebildet sein. Jedoch ist auch jede andere Lage des beweglichen Teils relativ zu dem Gehäuse für die erste Lage undloder die zweite Lage denkbar. Beispielsweise kann es sich auch um diverse Zwischenlagen des beweglichen Teils relativ zu den zwei Endlagen für die Bewegung des beweglichen Teils handeln.

Entsprechend kann in einer Lage des beweglichen Teils, in der eine geringe Kraft undloder ein geringes Moment auf das bewegliche Teil übertragen werden müssen/muss, aber eine hohe Geschwindigkeit des beweglichen Teils erforderlich oder gewünscht ist, mittels der Kopplungsvorrichtung eine entsprechende Kopplung realisiert werden kann, während in einer anderen Lage des beweglichen Teils, in der eine große Kraft undloder ein großes Moment auf das bewegliche Teil übertragen werden müssen/muss, aber eine niedrige Geschwindigkeit des beweglichen Teils ausreicht oder gewünscht ist, mittels der Kopplungsvorrichtung eine entsprechende Kopplung realisiert werden kann. Beides mit dem gleichen Antrieb. Somit lässt sich die auf das bewegliche Teil übertragene Kraft undloder das auf das bewegliche Teil übertragene Moment und/oder die Geschwindigkeit des beweglichen Teils bei dessen Bewegung bei Nutzung der gleichen Antriebsleistung und damit des gleichen Antriebs für jede Lage des beweglichen Teils, für die dies erforderlich ist, wunschgemäß anpassen. Das Getriebe ist als ein mechanisches Getriebe ausgebildet. Ein mechanisches Getriebe ist robust und auch unter schwierigen Umgebungsbedingungen zuverlässig in der Funktion.

Außerdem ist vorgesehen, dass das Getriebe eine Zahnstange und ein mit der Zahnstange in Eingriff befindliches Zahnrad aufweist. Die Kombination von Zahnstange und Zahnrad ermöglicht eine im Wesentlichen spielfreie und genaue Bewegung des beweglichen Teils relativ zu dem Gehäuse des erfindungsgemäßen Geräts. Entsprechend genau lässt sich eine bestimmte Lage des beweglichen Teils realisieren und einhalten. Dabei ist die Zahnstange wie auch das Zahnrad nach Art, Funktion, Material, Dimensionierung, Anordnung und Anzahl in weiten geeigneten Grenzen frei wählbar.

Die Zahnstange weist einen ersten Abschnitt und mindestens einen zweiten Abschnitt auf, wobei der erste Abschnitt und der zweite Abschnitt zueinander in einem stumpfen Winkel, bevorzugt in einem Winkel von 95° bis 135°, angeordnet sind. Hierdurch ist das erfindungsgemäße Gerät auf konstruktiv besonders einfache Weise realisiert. Der vorgenannte Winkel wird von dem ersten Abschnitt und dem mindestens einen zweiten Abschnitt eingeschlossen.

Eine vorteilhafte Weiterbildung der vorhergehenden Ausführungsform des erfindungsgemäßen Geräts sieht vor, dass die Zahnstange zwischen dem ersten Abschnitt und dem mindestens einen zweiten Abschnitt einen Übergangsabschnitt aufweist, wobei der Übergangsabschnitt als ein stetiger Übergang von dem ersten Abschnitt zu dem zweiten Abschnitt ausgebildet ist. Auf diese Weise ist ein stetiger Übergang der an das bewegliche Teil übertragenen Kraft undloder des an das bewegliche Teil übertragenen Moments und/oder der Geschwindigkeit des beweglichen Teils bei dessen Bewegung relativ zu dem Gehäuse erzielt. Die übertragene Kraft undloder das übertragene Moment undloder die Geschwindigkeit des beweglichen Teils ändert sich also allmählich und nicht abrupt.

Eine besonders vorteilhafte Weiterbildung der beiden letztgenannten Ausführungsformen des erfindungsgemäßen Geräts sieht vor, dass der mindestens eine zweite Abschnitt der Zahnstange zu der ersten Lage undloder zu der zweiten Lage des beweglichen Teils korrespondierend ausgebildet ist. Hierdurch ist eine Abstimmung des mindestens einen zweiten Abschnitts auf die konkreten Erfordernisse bei der Bewegung des beweglichen Teils in dem Bereich der ersten Lage undloder in dem Bereich der zweiten Lage des beweglichen Teils ermöglicht. Bei einer zu der ersten und zu der zweiten Lage korrespondierenden Ausbildung des mindestens einen zweiten Abschnitts der Zahnstange sind mindestens zwei zweite Abschnitte erforderlich.

Grundsätzlich ist die Kopplungsvorrichtung nach Art, Funktion, Aufbau, Form, Material, Anordnung und Anzahl in weiten geeigneten Grenzen frei wählbar. Eine vorteilhafte Weiterbildung des erfindungsgemäßen Geräts sieht vor, dass die Kopplungsvorrichtung eine Kopplungsstange aufweist, wobei das Getriebe an einem antriebsseitigen Ende der Kopplungsstange ausgebildet ist. Auf diese Weise ist die das Getriebe aufweisende Kopplungsvorrichtung konstruktiv besonders einfach und platzsparend realisiert.

Eine vorteilhafte Weiterbildung der vorgenannten Ausführungsform des erfindungsgemäßen Geräts, rückbezogen auf Anspruch 4, sieht vor, dass eine Längsachse des ersten Abschnitts der Zahnstange im Wesentlichen parallel zu einer Längsachse der Kopplungsstange angeordnet ist. Hierdurch ist ein, bezogen auf die für den jeweiligen Einzelfall ausgewählte Paarung von Zahnstange und Zahnrad, größtmöglicher Vorschub der Kopplungsstange der Kopplungsvorrichtung relativ zu dem Gehäuse ermöglicht. Entsprechend lässt sich das bewegliche Teil, korrespondierend zu dem ersten Abschnitt der Zahnstange, relativ zu dem Gehäuse mit einer größtmöglichen Geschwindigkeit bewegen.

Eine weitere vorteilhafte Weiterbildung des erfindungsgemäßen Geräts sieht vor, dass die Kopplungsvorrichtung an einem Hebelarm des beweglichen Teils oder einer Halterung für das bewegliche Teil befestigt ist. Auf diese Weise, also unter Verwendung des Hebelarms, lässt sich eine durch die Kopplungsvorrichtung auf das bewegliche Teil übertragene Kraft konstruktiv einfach in ein entsprechendes Moment umwandeln.

Das erfindungsgemäße Gerät für die Zubereitung von Speisen undloder Getränken oder für die Reinigung eines zu reinigenden Gutes ist in weiten geeigneten Grenzen frei wählbar. Beispielsweise kann das erfindungsgemäße Gerät für die Zubereitung von Speisen undloder Getränken ausgebildet sein. Lediglich exemplarisch seien Backöfen, Herde, Dampfgarer, Mikrowellengeräte, Kombinationsgeräte oder Kaffeemaschinen genannt. Beispiele für ein als Gerät für die Reinigung eines zu reinigenden Gutes ausgebildetes erfindungsgemäßes Gerät sind Waschmaschinen oder Geschirrspülmaschinen. Das erfindungsgemäße Gerät kann dabei für den Haushalt, also als ein Haushaltsgerät, oder für den professionellen Betrieb ausgebildet sein. Denkbar sind auch spezielle Anwendungsfelder, wie beispielsweise Spülgeräte für Krankenhausausrüstung oder dergleichen.

Eine andere vorteilhafte Weiterbildung des erfindungsgemäßen Geräts sieht vor, dass das Gerät einen durch eine Tür verschließbaren Behandlungsraum aufweist und das bewegliche Teil als die Tür ausgebildet ist, wobei der Antrieb an einer Rückwand des Behandlungsraums und die Kopplungsvorrichtung an einer Seitenwand des Behandlungsraums in dem Gehäuse angeordnet sind. Hierdurch ist das erfindungsgemäße Gerät platzsparend und damit kompakt realisierbar. Beispielsweise kann es vorgesehen sein, dass beidseitig des Behandlungsraums des erfindungsgemäßen Geräts in dem Zwischenraum zwischen dem Behandlungsraum und dem Gehäuse jeweils eine mit dem Antrieb und dem beweglichen Teil, beispielsweise der Tür, kraft- undloder momentübertragend verbundene Kopplungsvorrichtung angeordnet ist. Denkbar ist jedoch auch, dass jede der vorgenannten Kopplungsvorrichtungen mit jeweils einem eigenen Antrieb kraft- undloder momentübertragend verbunden ist.

Ein Ausführungsbeispiel der Erfindung ist in den Zeichnungen rein schematisch dargestellt und wird nachfolgend näher beschrieben. Es zeigt
- Figur 1: ein Ausführungsbeispiel eines erfindungsgemäßen Geräts in einer teilweisen Schnittdarstellung, in einer Seitenansicht,
- Figur 2: das Ausführungsbeispiel aus Fig. 1 in einer teilweisen Detailansicht im Bereich des Antriebs,
- Figur 3: ein zu dem Ausführungsbeispiel korrespondierendes Türöffnungswinkel-Winkelgeschwindigkeit-Diagramm und
- Figur 4: ein zu dem Ausführungsbeispiel korrespondierendes Türöffnungswinkel-Kraft-Diagramm.

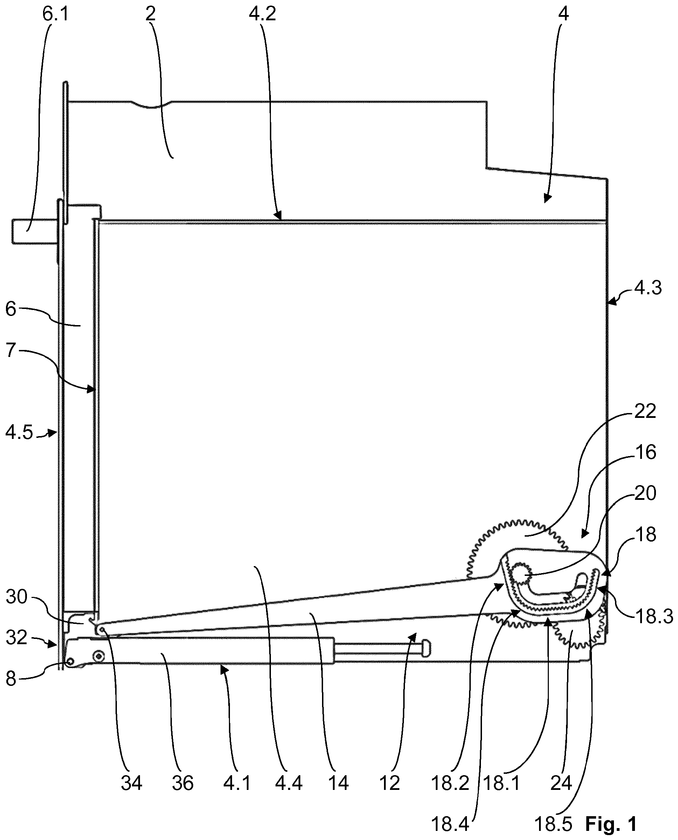

In Fig. 1 ist ein Ausführungsbeispiel eines erfindungsgemäßen Geräts in einer teilweisen Schnittdarstellung gezeigt. Das Gerät ist als ein Haushaltsbackofen ausgebildet und weist ein Gehäuse 2 mit einem als Backmuffel ausgebildeten Behandlungsraum 4 auf. Die Backmuffel 4 ist durch einen Boden 4.1, eine Decke 4.2, eine Rückwand 4.3 und zwei Seitenwände 4.4 begrenzt, wobei in Fig. 1 lediglich eine Seitenwand 4.4 sichtbar ist. An einer in der Bildebene von Fig. 1 links dargestellten Frontseite des Haushaltsbackofen ist eine Tür 6 angeordnet, mittels der eine Backmuffelöffnung 4.5 und ein nicht dargestelltes Inneres der Backmuffel 4 in einer Schließlage der Tür 6 im Wesentlichen dicht verschließbar ist. Hierfür ist an einem Backmuffelrahmen 7 eine nicht dargestellte, umlaufende Dichtung auf dem Fachmann bekannte Weise angeordnet. Die Tür 6 ist in Fig. 1 in der Schließlage dargestellt. In einer nicht dargestellten Öffnungslage der Tür 6 ist diese um eine Drehachse 8 um etwa 85° im Gegenuhrzeigersinn gedreht, also in der Bildebene von Fig. 1 nach links, an dem Gehäuse 2 angeordnet. In der in Fig. 1 dargestellten Schließlage weist die Tür 6 relativ zu dem Gehäuse 2 einen Drehwinkel von 0° auf. Die Tür 6 ist auf dem Fachmann bekannte Weise mittels eines Türgriffs 6.1 von der Schließlage in die Öffnungslage und von der Öffnungslage in die Schließlage überführbar. Die Tür 6 ist derart ausgebildet und an dem Gehäuse 2 angeordnet, dass die Tür 6 auch in eine beliebige Zwischenlage zwischen der Öffnungslage und der Schließlage, also den beiden Endlagen der Tür 6, überführbar und platzierbar ist.

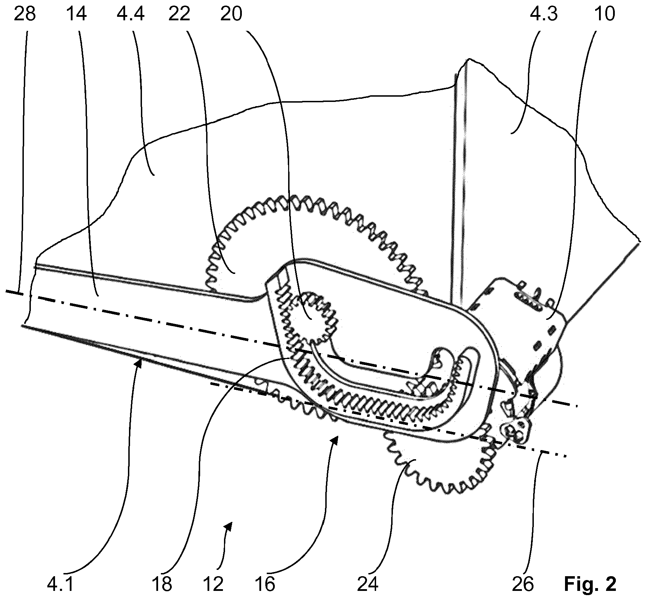

Zusätzlich zu der manuellen Bewegung der Tür 6 ist die Tür 6 gemäß dem vorliegenden Ausführungsbeispiel auch mittels eines als Elektromotor ausgebildeten Antriebs 10 in einem Betriebsmodus des Elektromotors 10 automatisch bewegbar. Der Elektromotor 10 ist in der Fig. 2 dargestellt. Hierfür ist der Elektromotor 10 mittels einer nicht dargestellten Steuerung auf dem Fachmann bekannte Weise ansteuerbar. Diese Ansteuerung kann beispielsweise in Abhängigkeit eines Programms für den Backofen undloder einer Messung einer Messgröße in oder an dem Backofen undloder einer Benutzereingabe mittels einer an dem Backofen angeordneten Benutzerschnittstelle erfolgen. Als Messgröße in dem Backofen kann beispielsweise ein in dem Inneren der Backmuffel 4 angeordneter Temperaturfühler Verwendung finden. Die Schließlage der Tür 6 wäre somit beispielsweise eine erste Lage der Tür 6 und die Öffnungslage der Tür 6 wäre somit eine zweite Lage der Tür 6, wobei die erste und die zweite Lage entsprechend jeweils als eine Endlage der Tür 6 ausgebildet sind.

Der Elektromotor 10 wirkt zur Bewegung der Tür 6 jedoch nicht direkt auf die Tür 6 ein. In der Kraft- und Momentübertragungsverbindung zwischen dem Elektromotor 10 und der Tür 6 ist eine Kopplungsvorrichtung 12 angeordnet, die sowohl mit dem Elektromotor 10 wie auch mit der Tür 6 in Kraft- und Momentübertragungsverbindung steht. Die Kopplungsvorrichtung 12 weist eine Kopplungsstange 14 auf und ist antriebsseitig mittels eines Getriebes 16 mit dem Elektromotor 10 kraft- und momentübertragend verbunden. Das Getriebe 16 weist eine Zahnstange 18 und ein mit der Zahnstange 18 in Eingriff befindliches Zahnrad 20 mit einer Stirnverzahnung auf. Das Zahnrad 20 ist mittels zweier Zahnräder 22 und 24 mit dem Elektromotor 10 kraft- um momentübertragend verbunden. Siehe hierzu die Fig. 1 in Verbindung mit der Fig. 2. Das Getriebe 16 ist bei dem vorliegenden Ausführungsbeispiel somit als ein mechanisches Getriebe 16 ausgebildet.

Der Elektromotor 10 ist an der Rückwand 4.3 der Backmuffel 4 angeordnet, nämlich in einem zwischen der Rückwand 4.3 der Backmuffel 4 und einer nicht dargestellten Außenwand des Gehäuses 2 ausgebildeten Zwischenraum. Die Kopplungsvorrichtung 12 mit der Kopplungsstange 14 und dem Getriebe 16 ist an der in der Bildebene von Fig. 1 dargestellten Seitenwand 4.4 der Backmuffel 4 angeordnet, nämlich in einem zwischen der Seitenwand 4.4 der Backmuffel 4 und einer nicht dargestellten Außenwand des Gehäuses 2 ausgebildeten Zwischenraum. Die Zahnstange 18 des Getriebes 16 ist bei dem vorliegenden Ausführungsbeispiel an der Kopplungsstange 14 ausgeformt; siehe Fig. 1. Das mit der Zahnstange 18 in Eingriff befindliche Zahnrad 20 ist mittels einer nicht dargestellten Welle drehfest mit dem Zahnrad 22 verbunden.

Die Zahnstange 18 weist einen ersten Abschnitt 18.1 und zwei zweite Abschnitte 18.2 und 18.3 auf, wobei der erste Abschnitt 18.1 und der eine zweite Abschnitt 18.2 zueinander in einem stumpfen Winkel, nämlich 100°, angeordnet sind. Gleiches gilt für die Anordnung des anderen zweiten Abschnitts 18.3 relativ zu dem ersten Abschnitt 18.1, die zueinander ebenfalls in einem stumpfen Winkel, nämlich 100°, angeordnet sind. Der jeweilige Winkel von 100° wird von dem ersten Abschnitt 18.1 und dem jeweiligen zweiten Abschnitt 18.2, 18.3 der Zahnstange 18 eingeschlossen. Eine Längsachse 26 des ersten Abschnitts 18.1 der Zahnstange 18 verläuft bei dem vorliegenden Ausführungsbeispiel im Wesentlichen parallel zu einer Längsachse 28 der Kopplungsstange 14. Siehe Fig. 2. Der erste Abschnitt 18.1 ist mit dem einen zweiten Abschnitt 18.2 und mit dem anderen zweiten Abschnitt 18.3 jeweils mittels eines Übergangsabschnitts 18.4 und 18.5 derart verbunden, dass sich ein stetiger Übergang von dem ersten Abschnitt 18.1 zu den beiden zweiten Abschnitten 18.2 und 18.3 ergibt. Entsprechend sind die beiden Übergangsabschnitte 18.4 und 18.5 der Zahnstange 18 jeweils kurvenartig ausgebildet. Insgesamt ist die Zahnstange 18 U-förmig geformt; siehe Fig. 1 und 2.

Türseitig ist die Kopplungsstange 14 der Kopplungsvorrichtung 12 an einem Hebelarm 30 einer Halterung 32 für die Tür 6 um eine Drehachse 34 drehbar befestigt. Mittels der Halterung 32 ist die Tür 6 mit einer an dem Gehäuse 2 befestigten Feder-Dämpfer-Vorrichtung 36 um die Drehachse 8 drehbar befestigt.

Nachfolgend wird die Funktionsweise des erfindungsgemäßen Geräts gemäß dem vorliegenden Ausführungsbeispiel und anhand der Fig. 1 bis 4 näher erläutert.

Ein Benutzer möchte die Tür 6 von der in der Fig. 1 gezeigten Schließlage in die nicht dargestellte Öffnungslage überführen. Hierzu nimmt der Benutzer an einer ebenfalls nicht dargestellten Benutzerschnittstelle des Haushaltsbackofens eine diesbezügliche Eingabe vor. Aufgrund der Eingabe des Benutzers steuert die nicht dargestellte Steuerung des Haushaltsbackofens den Elektromotor 10 entsprechend an. Der Elektromotor 10 wird eingeschaltet und gibt eine konstante Antriebsleistung mittels der Zahnräder 24 und 22 an das Zahnrad 20 ab. Das Zahnrad 20 ist in Eingriff mit der Zahnstange 18 und die Zahnstange 18 wird entsprechend der an den Zahnrädern 20, 22 und 24 sowie an der Zahnstange 18 jeweils ausgebildeten Verzahnungen und den Durchmessern der Zahnräder 20, 22, und 24 relativ zu dem Zahnrad 20 in der Bildebene von Fig. 1 nach links bewegt. Da die Zahnstange 18 an der Kopplungsstange 14 ausgeformt ist, bewegt sich somit auch die Kopplungsstange 14 in der Bildebene von Fig. 1 nach links, also in Richtung der Tür 6.

Mittels der drehgelenkigen Befestigung der Kopplungsstange 14 an dem Hebelarm 30 der Halterung 32 dreht die Kopplungsstange 14 den Hebelarm 30 im Gegenuhrzeigersinn um die Drehachse 8, also in der Bildebene von Fig. 1 nach links. Da an der Halterung 32 die Tür 6 befestigt ist, wird somit die Tür 6 ebenfalls im Gegenuhrzeigersinn um die Drehachse 8 gedreht. Die Tür 6 wird von der in der Fig. 1 dargestellten Schließlage in die nicht dargestellte Öffnungslage überführt. Sobald die Tür 6 die Öffnungslage erreicht hat, also um 85° um die Drehachse 8 gedreht worden ist, wird dies beispielsweise mittels einer geeignet ausgebildeten Sensorik von der Steuerung erfasst. Die Steuerung schaltet den Elektromotor 10 aus.

Bei der Überführung von der Schließlage in die Öffnungslage läuft das Zahnrad 20 relativ zu der Zahnstange 18 von der in der Bildebene von Fig. 1 dargestellten Lage, also von dem freien Ende des einen zweiten Abschnitts 18.2, über den ersten Abschnitt 18.1 bis zu dem freien Ende des anderen zweiten Abschnitts 18.3 der U-förmig ausgebildeten Zahnstange 18.

Möchte der Benutzer die Tür 6 von deren Öffnungslage wieder in die Schließlage überführen, kann er dies beispielsweise, analog zu den obigen Ausführungen, wieder durch eine Eingabe mittels der Benutzerschnittstelle auslösen. In diesem Fall wird der Elektromotor 10 von der Steuerung derart angesteuert, dass der Elektromotor 10 in die andere Richtung dreht. Entsprechend läuft das Zahnrad 20 relativ zu der Zahnstange 18 von dem freien Ende des anderen zweiten Abschnitts 18.3, über den ersten Abschnitt 18.1 bis zu dem freien Ende des einen zweiten Abschnitts 18.2 der U-förmig ausgebildeten Zahnstange 18. Die Zahnstange 18 und damit die Kopplungsstange 14, an der die Zahnstange 18 ausgeformt ist, bewegt sich bei der Überführung der Tür 6 von der Öffnungslage in die Schließlage in der Bildebene von Fig. 1 nach rechts, so dass die Kopplungsstange 14 den Hebelarm 30 der Halterung 32 und damit die Tür 6 in der Bildebene von Fig. 1 im Uhrzeigersinn um die Drehachse 8, also nach rechts, verschwenkt.

Die einzelnen Abschnitte 18.1, 18.2 und 18.3 der Zahnstange 18 sind dabei derart aufeinander sowie auf die Öffnungslage und die Schließlage der Tür 6 abgestimmt ausgebildet, dass mit ein und demselben Elektromotor 10 und mit dessen konstanter Antriebsleistung die Tür 6 in einer Lage der Tür 6, in der eine geringe Kraft undloder ein geringes Moment auf das bewegliche Teil übertragen werden müssen/muss, aber eine hohe Geschwindigkeit der Tür 6 erforderlich oder gewünscht ist, mittels der Kopplungsvorrichtung 12 eine entsprechende Kopplung realisiert werden kann, während in einer anderen Lage der Tür 6, in der eine große Kraft undloder ein großes Moment auf die Tür 6 übertragen werden müssenlmuss, aber eine niedrige Geschwindigkeit der Tür 6 ausreicht oder gewünscht ist, mittels der Kopplungsvorrichtung 12 eine entsprechende Kopplung realisiert werden kann.

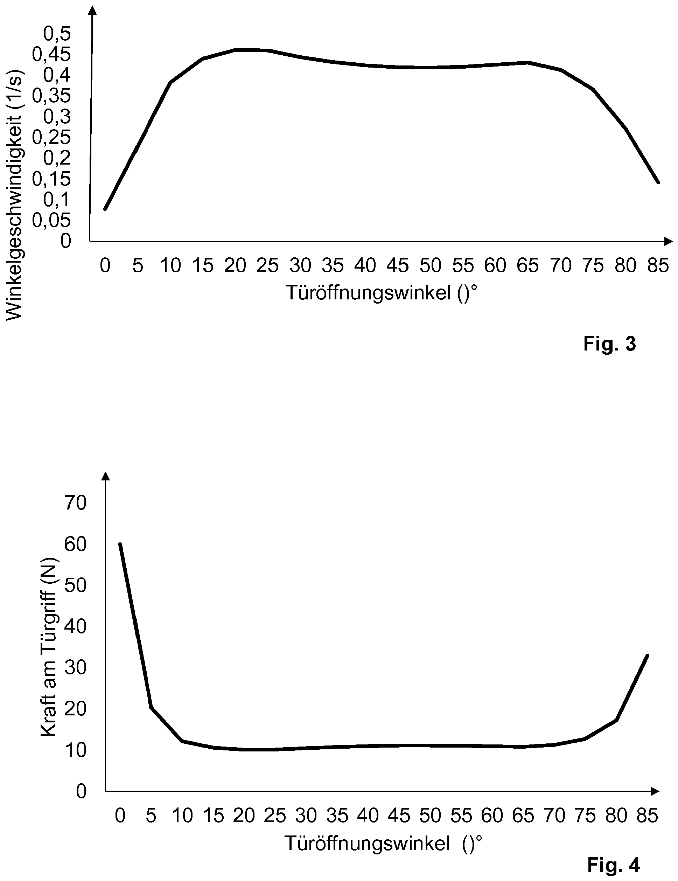

Der eine zweite Abschnitt 18.2 der Zahnstange 18 ist dabei derart korrespondierend zu der Schließlage der Tür 6 ausgebildet, dass in dem Bereich der in der Bildebene von Fig. 1 dargestellten Schließlage der Tür 6 diese mit einer niedrigen Geschwindigkeit, aber dafür mit einem umso höheren Moment bewegt wird. Entsprechend kraftvoll, nämlich dicht, wird die Tür 6 gegen die an dem Rahmen 7 der Backmuffel 4 angeordnete Dichtung des Gehäuses 2 gedrückt. Hierfür ist der eine zweite Abschnitt 18.2 in einem Winkel von 100° zu dem ersten Abschnitt 18.1 der Zahnstange 18 angeordnet. Entsprechend dieses Winkels wird die Kopplungsstange 14 mittels des Getriebes 16 bei konstanter Antriebsleistung des Elektromotors 10 mit einer lediglich geringen Geschwindigkeit bewegt, so dass die Tür 6 in dem Bereich von deren Schließlage ebenfalls lediglich mit einer geringen Winkelgeschwindigkeit bewegt wird. Siehe hierzu auch die Fig. 3, in der dies exemplarisch dargestellt ist. Wie aus Fig. 3 ersichtlich ist, erstreckt sich der Bereich der Schließlage von 0° Türöffnungswinkel bis etwa 5° Türöffnungswinkel.

Der erste Abschnitt 18.1 der Zahnstange ist derart korrespondierend zu von der Schließlage und der Öffnungslage der Tür 6 weiter entfernten Zwischenlagen ausgebildet, dass in dem ersten Abschnitt 18.1, also wenn sich die Tür 6 in einer von deren Schließlage und deren Öffnungslage weiter entfernten Zwischenlage befindet, sich die Kopplungsstange 14 mittels des Getriebes 16 bei konstanter Antriebsleistung des Elektromotors 10 aufgrund der im Wesentlichen parallel zueinander verlaufenden Längsachsen 26 und 28 der Zahnstange 18 und der Kopplungsstange 14 mit einer entsprechend höheren Geschwindigkeit bewegt, so dass die Tür 6 weiter entfernt von deren Schließlage und deren Öffnungslage ebenfalls mit einer entsprechend höheren Winkelgeschwindigkeit bewegt wird; siehe Fig. 3. Wie aus Fig. 3 ferner hervorgeht, erstreckt sich der Bereich der Zwischenlagen, die jeweils weiter von der Schließlage und der Öffnungslage entfernt sind, von etwa 15° Türöffnungswinkel bis etwa 70° Türöffnungswinkel.

Analog zu dem einen zweiten Abschnitt 18.2 der Zahnstange 18 und der Schließlage der Tür 6 sind auch der andere zweite Abschnitt 18.3 der Zahnstange 18 und die Öffnungslage der Tür 6 derart aufeinander abgestimmt ausgebildet, dass mit ein und demselben Elektromotor 10 und mit dessen konstanter Antriebsleistung die Tür 6 in dem Bereich der nicht dargestellten Öffnungslage der Tür 6 diese ebenfalls mit einer niedrigen Geschwindigkeit, aber dafür mit einem umso höheren Moment bewegt wird. Entsprechend kraftvoll wird die Tür 6 in deren nicht dargestellte Öffnungslage bewegt und positioniert. Hierfür ist der andere zweite Abschnitt 18.3 ebenfalls in einem Winkel von 100° zu dem ersten Abschnitt 18.1 der Zahnstange 18 angeordnet. Entsprechend dieses Winkels wird die Kopplungsstange 14 mittels des Getriebes 16 bei konstanter Antriebsleistung des Elektromotors 10 mit einer ebenfalls lediglich geringen Geschwindigkeit bewegt, so dass die Tür 6 in dem Bereich von deren Öffnungslage lediglich mit einer geringen Winkelgeschwindigkeit bewegt wird. Siehe hierzu die Fig. 3, in der dies ebenfalls dargestellt ist. Der Bereich der Öffnungslage erstreckt sich etwa von 80° Türöffnungswinkel bis etwa 85° Türöffnungswinkel.

Entsprechend erstrecken sich die mittels der beiden Übergangsabschnitte 18. 4 und 18.5 der Zahnstange 18 realisierten Übergangsbereiche etwa zwischen 5° und 15° Türöffnungswinkel und von etwa 70° bis etwa 80° Türöffnungswinkel.

Umgekehrt verhält es sich mit der von der Kopplungsstange 14 auf die Tür 6 übertragenen Kraft und dem mittels der Kopplungsstange 14 in die Tür 6 eingeleiteten Moment. Siehe hierzu Fig. 4, in der eine an dem Türgriff 6.1 der Tür 6 gemessene Kraft in Abhängigkeit von dem Türöffnungswinkel exemplarisch aufgetragen ist.

Wenn sich das Zahnrad 20 in dem einen ersten Abschnitt 18.2 der Zahnstange 18 bewegt, also zu dem Bereich der Schließlage der Tür 6 korrespondiert, wird mittels der Kopplungsstange 14 eine große Kraft und entsprechend ein großes Moment in die Tür 6 eingeleitet. Vergleichbares gilt, wenn sich das Zahnrad 20 in dem anderen ersten Abschnitt 18.3 der Zahnstange 18 bewegt, also zu dem Bereich der Öffnungslage der Tür 6 korrespondiert. Im Unterschied dazu ist die von der Kopplungsstange 14 auf die Tür 6 übertragene Kraft und das von der Kopplungsstange 14 in die Tür 6 eingeleitete Moment in dem Türöffnungswinkelbereich von etwa 15° bis etwa 70° lediglich gering. Siehe Fig. 4.

Auf diese Weise ist mittels der Erfindung bei gleichbleibender Antriebsleistung des Elektromotors 10 zum einen eine zügige Überführung der Tür 6 von deren Schließlage in deren Öffnungslage und von deren Öffnungslage in deren Schließlage ermöglicht. Zum anderen liefert der Elektromotor 10 mittels der Kopplungsvorrichtung 12 in dem Bereich der Schließlage der Tür 6 und in dem Bereich der Öffnungslage der Tür 6 genügend Moment, um die Tür 6 in deren Schließlage im Wesentlichen dicht an die Dichtung des Backmuffelrahmens 7 zu drücken und in deren Öffnungslage sicher zu positionieren und zu halten.

Die Tür 6 wird zwischen den beiden Endlagen der Tür 6, nämlich der Schließlage und der Öffnungslage der Tür 6, somit im Wesentlichen in zwei Geschwindigkeiten bewegt, so dass lediglich eine geringe Antriebsleistung des Antriebs 10 benötigt wird. Eine große Kraft und ein großes Moment werden lediglich in den Lagen der Tür 6 erzeugt, in denen dies erforderlich ist, nämlich in dem Bereich der Schließlage und der Schließlage sowie in dem Bereich der Öffnungslage und der Öffnungslage der Tür 6. In den übrigen Lagen der Tür 6, also in den weiter von der Schließlage und der Öffnungslage der Tür 6 entfernten Zwischenlagen der Tür 6, ist die erzeugte Kraft und das erzeugte Moment derart gering, dass eine Verletzungsgefahr für einen Benutzer bei der Bedienung des erfindungsgemäßen Geräts gemäß dem vorliegenden Ausführungsbeispiel wirksam vermieden, zumindest jedoch reduziert ist. Die Anordnung der Kopplungsvorrichtung 12 an der Seitenwand 4.4 der Backmuffel 4 sowie die Anordnung des Elektromotors 10, beispielsweise eines Drehstrommotors, an der Rückwand 4.3 der Backmuffel 4 ermöglichen eine platzsparendes und damit kompaktes erfindungsgemäßes Gerät.

Die Erfindung ist nicht auf das vorliegende Ausführungsbeispiel begrenzt. Beispielsweise kann die Erfindung vorteilhaft auch bei anderen Geräten für die Zubereitung von Speisen undloder Getränken sowie für die Reinigung eines zu reinigenden Gutes eingesetzt werden. Auch ist eine gewerbliche Anwendung und damit ein professioneller Einsatz des erfindungsgemäßen Geräts möglich.

Darüber hinaus kann das Getriebe beispielsweise auch derart ausgebildet sein, dass die Zahnstange einen etwa S-förmigen Verlauf aufweist. Hierfür kann beispielsweise einer der beiden zweiten Abschnitte 18.2 der Zahnstange 18 gemäß dem vorliegenden Ausführungsbeispiel in der Bildebene von Fig. 1 an der Längsachse 26 des ersten Abschnitts 18.1 der Zahnstange 18 gespiegelt angeordnet sein. Beispielsweise, indem der andere zweite Abschnitt 18.3 der Zahnstange 18 sich in der Bildebene von Fig. 1 nach unten erstreckt. Im Ergebnis würde sich an der Funktionsweise und der Wirkung gegenüber dem vorliegenden Ausführungsbeispiel nichts ändern. Jedoch sind auch andere Ausbildungen des Getriebes undloder der Kopplungsstange sowie der Kopplungsvorrichtung insgesamt denkbar.

Die erste Lage undloder die zweite Lage muss nicht zwingend als eine Endlage des beweglichen Teils ausgebildet sein. Auch ist das bewegliche Teil nicht auf Türen, Klappen oder dergleichen beschränkt, sondern in weiten geeigneten Grenzen frei wählbar.

## Patentansprüche

1. Gerät für die Zubereitung von Speisen undloder Getränken oder für die Reinigung eines zu reinigenden Gutes, umfassend ein Gehäuse (2) und ein relativ zu dem Gehäuse (2) bewegliches Teil (6), wobei das bewegliche Teil (6) mittels einer Kopplungsvorrichtung (12) mit einem an dem Gehäuse (2) angeordneten Antrieb (10) kraftübertragend undloder momentübertragend verbunden ist und in einem Betriebsmodus des Antriebs (10) zwischen einer ersten Lage und einer zweiten Lage hin und her bewegbar ist, wobei die Kopplungsvorrichtung (12) ein mechanisches Getriebe (16) aufweist, welches derart ausgebildet ist, dass bei einer Bewegung des beweglichen Teils (6) in Richtung der ersten Lage undloder in Richtung der zweiten Lage die von dem Antrieb (10) mittels der Kopplungsvorrichtung (12) auf das bewegliche Teil (6) ausgeübte Kraft undloder das von dem Antrieb (10) mittels der Kopplungsvorrichtung (12) auf das bewegliche Teil (6) ausgeübte Moment undloder eine Geschwindigkeit des beweglichen Teils (6) abhängig von der Lage des beweglichen Teils (6) sind/ist,
**dadurch gekennzeichnet,**
**dass** das Getriebe (16) eine Zahnstange (18) und ein mit der Zahnstange (18) in Eingriff befindliches Zahnrad (20) aufweist und dass die Zahnstange (18) einen ersten Abschnitt (18.1) und mindestens einen zweiten Abschnitt (18.2, 18.3) aufweist, wobei der erste Abschnitt (18.1) und der zweite Abschnitt (18.2, 18.3) zueinander in einem stumpfen Winkel, bevorzugt in einem Winkel von 95° bis 135°, angeordnet sind.

2. Gerät nach Anspruch 1, **dadurch gekennzeichnet, dass** die Zahnstange (18) zwischen dem ersten Abschnitt (18.1) und dem mindestens einen zweiten Abschnitt (18.2, 18.3) einen Übergangsabschnitt (18.4, 18.5) aufweist, wobei der Übergangsabschnitt (18.4, 18.5) als ein stetiger Übergang von dem ersten Abschnitt (18.1) zu dem zweiten Abschnitt (18.2, 18.3) ausgebildet ist.

3. Gerät nach Anspruch 1 oder 2, **dadurch gekennzeichnet, dass** der mindestens eine zweite Abschnitt (18.2, 18.3) der Zahnstange (18) zu der ersten Lage undloder zu der zweiten Lage des beweglichen Teils (6) korrespondierend ausgebildet ist.

4. Gerät nach einem der Ansprüche 1 bis 3, **dadurch gekennzeichnet, dass** die Kopplungsvorrichtung (12) eine Kopplungsstange (14) aufweist, wobei das Getriebe (16) an einem antriebsseitigen Ende der Kopplungsstange (14) ausgebildet ist.

5. Gerät nach Anspruch 4, **dadurch gekennzeichnet, dass** eine Längsachse (26) des ersten Abschnitts (18.1) der Zahnstange (18) im Wesentlichen parallel zu einer Längsachse (28) der Kopplungsstange (14) angeordnet ist.

6. Gerät nach einem der Ansprüche 1 bis 5, **dadurch gekennzeichnet, dass** die Kopplungsvorrichtung (12) an einem Hebelarm (30) des beweglichen Teils oder einer Halterung (32) für das bewegliche Teil (6) befestigt ist.

7. Gerät nach einem der Ansprüche 1 bis 6, **dadurch gekennzeichnet, dass** das Gerät einen durch eine Tür (6) verschließbaren Behandlungsraum (4) aufweist und das bewegliche Teil (6) als die Tür (6) ausgebildet ist, wobei der Antrieb (10) an einer Rückwand (4.3) des Behandlungsraums (4) und die Kopplungsvorrichtung (12) an einer Seitenwand (4.4) des Behandlungsraums (4) in dem Gehäuse (2) angeordnet sind.

## Claims

1. Appliance for preparing food and/or beverages or for cleaning an item to be cleaned, comprising a housing (2) and a part (6) movable relative to the housing (2), the movable part (6) being force-transmittingly and/or torque-transmittingly connected by means of a coupling device (12) to a drive (10) arranged on the housing (2) and being movable back and forth between a first position and a second position in an operating mode of the drive (10), the coupling device (12) having mechanical gearing (16) which is designed such that, when the movable part (6) is moved in the direction of the first position and/or in the direction of the second position, the force exerted on the movable part (6) by the drive (10) by means of the coupling device (12) and/or the torque exerted on the movable part (6) by the drive (10) by means of the coupling device (12) and/or a speed of the movable part (6) are/is dependent on the position of the movable part (6),
**characterised in that**
the gearing (16) has a gear rack (18) and a gear wheel (20) in engagement with the gear rack (18), **and in that** the gear rack (18) has a first portion (18.1) and at least one second portion (18.2, 18.3), the first portion (18.1) and the second portion (18.2, 18.3) being arranged at an obtuse angle to one another, preferably at an angle of 95° to 135°.

2. Appliance according to claim 1, **characterised in that** the gear rack (18) has a transition portion (18.4, 18.5) between the first portion (18.1) and the at least one second portion (18.2, 18.3), the transition portion (18.4, 18.5) being designed as a continuous transition from the first portion (18.1) to the second portion (18.2, 18.3).

3. Appliance according to either claim 1 or 2, **characterised in that** the at least one second portion (18.2, 18.3) of the gear rack (18) is designed to correspond to the first position and/or to the second position of the movable part (6).

4. Appliance according to any of claims 1 to 3, **characterised in that** the coupling device (12) has a coupling rod (14), the gearing (16) being formed at a drive-side end of the coupling rod (14).

5. Appliance according to claim 4, **characterised in that** a longitudinal axis (26) of the first portion (18.1) of the gear rack (18) is arranged substantially in parallel with a longitudinal axis (28) of the coupling rod (14).

6. Appliance according to any of claims 1 to 5, **characterised in that** the coupling device (12) is fixed to a lever arm (30) of the movable part or a mounting (32) for the movable part (6).

7. Appliance according to any of claims 1 to 6, **characterised in that** the appliance has a processing chamber (4) which can be closed by a door (6) and the movable part (6) is designed as the door (6), the drive (10) being arranged on a rear wall (4.3) of the processing chamber (4) and the coupling device (12) being arranged on a side wall (4.4) of the processing chamber (4) in the housing (2).

## Revendications

1. Appareil destiné à préparer des aliments et/ou des boissons ou à nettoyer un produit à nettoyer, comprenant un boîtier (2) et une partie mobile (6) par rapport au boîtier (2), la partie mobile (6) étant reliée au moyen d'un dispositif d'accouplement (12) à un entraînement (10) disposé sur le boîtier (2) de manière à transmettre une force et/ou un couple et pouvant être déplacée en va-et-vient entre une première position et une seconde position dans un mode de fonctionnement de l'entraînement (10), le dispositif d'accouplement (12) présentant une transmission (16) mécanique qui est réalisée de telle sorte que, lors d'un déplacement de la partie mobile (6) dans la direction de la première position et/ou dans la direction de la seconde position, la force exercée par l'entraînement (10) au moyen du dispositif d'accouplement (12) sur la partie mobile (6) et/ou le couple exercé par l'entraînement (10) au moyen du dispositif d'accouplement (12) sur la partie mobile (6) et/ou une vitesse de la partie mobile (6) dépend/dépendent de la position de la partie mobile (6),
**caractérisé en ce**
**que** la transmission (16) présente une crémaillère (18) et une roue dentée (20) en prise avec la crémaillère (18) **et en ce que** la crémaillère (18) présente une première section (18.1) et au moins une seconde section (18.2, 18.3), la première section (18.1) et la seconde section (18.2, 18.3) étant disposées l'une par rapport à l'autre selon un angle obtus, de préférence selon un angle de 95° à 135°.

2. Appareil selon la revendication 1, **caractérisé en ce que** la crémaillère (18) présente une section de transition (18.4, 18.5) entre la première section (18.1) et l'au moins une seconde section (18.2, 18.3), la section de transition (18.4, 18.5) étant réalisée comme une transition continue de la première section (18.1) à la seconde section (18.2, 18.3).

3. Appareil selon la revendication 1 ou 2, **caractérisé en ce que** l'au moins une seconde section (18.2, 18.3) de la crémaillère (18) est réalisée de manière à correspondre à la première position et/ou à la seconde position de la partie mobile (6).

4. Appareil selon l'une des revendications 1 à 3, **caractérisé en ce que** le dispositif d'accouplement (12) présente une barre d'accouplement (14), la transmission (16) étant réalisée en une extrémité côté entraînement de la barre d'accouplement (14).

5. Appareil selon la revendication 4, **caractérisé en ce qu'**un axe longitudinal (26) de la première section (18.1) de la crémaillère (18) est disposé de manière sensiblement parallèle à un axe longitudinal (28) de la barre d'accouplement (14).

6. Appareil selon l'une des revendications 1 à 5, **caractérisé en ce que** le dispositif d'accouplement (12) est fixé à un bras de levier (30) de la partie mobile ou à un support (32) pour la partie mobile (6).

7. Appareil selon l'une des revendications 1 à 6, **caractérisé en ce que** l'appareil présente un espace de traitement (4) pouvant être fermé par une porte (6) et la partie (6) mobile est réalisée comme la porte (6), l'entraînement (10) étant disposé au niveau d'une paroi arrière (4.3) de l'espace de traitement (4) et le dispositif d'accouplement (12) au niveau d'une paroi latérale (4.4) de l'espace de traitement (4) dans le boîtier (2).
